# EUROPEAN PATENT SPECIFICATION

(11) **EP 2 026 598 B1**
(45) Date of publication and mention of the grant of the patent: **23.07.2014**
(21) Application number: 07743602.0
(22) Date of filing: 17.05.2007
(51) Int. Cl.: H04R 3/00, H04M 1/00, H04M 3/56, H04R 1/40

(54) **VOICE CONFERENCE DEVICE**
SPRACHKONFERENZEINRICHTUNG
DISPOSITIF DE CONFÉRENCE VOCALE

(30) Priority: 25.05.2006 JP 2006145697
(43) Date of publication of application: 18.02.2009
(73) Proprietor: YAMAHA CORPORATION, Hamamatsu-shi Shizuoka-ken 430-8650 (JP)
(72) Inventor: ISHIBASHI, Toshiaki, Hamamatsu-shi, Shizuoka (JP); SUZUKI, Satoshi, Hamamatsu-shi, Shizuoka (JP); TANAKA Ryo, Hamamatsu-shi, Shizuoka (JP); UKAI Satoshi, Hamamatsu-shi, Shizuoka (JP)
(74) Representative: Wagner, Karl H.
(86) International application number: PCT/JP2007/060167
(87) International publication number: WO 2007/138878

(56) References cited:
- WO-A1-2005/004532
- WO-A1-2005/074317
- JP-A- 56 098 094
- JP-A- 59 069 800
- CAO Y ET AL: "SPEECH ENHANCEMENT USING MICROPHONE ARRAY WITH MULTI-STAGE PROCESSING", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E79-A, no. 3, 1 March 1996 (1996-03-01), pages 386-394, XP000594739, ISSN: 0916-8508
- ELKO G W: "Microphone array systems for hands-free telecommunication", SPEECH COMMUNICATION, ELSEVIER SCIENCE PUBLISHERS, AMSTERDAM, NL, vol. 20, no. 3-4, 1 December 1996 (1996-12-01), pages 229-240, XP004729887, ISSN: 0167-6393, DOI: 10.1016/S0167-6393(96)00057-X

## Description

### Technical Field

The present invention relates to a audio conference device used in the audio conference held at a plurality of spots via the network, or the like and, more particularly, a audio conference device for collecting a sound emitted from a talker's direction by detecting the talker's direction.

### Background Art

In the prior art, as the method of holding the audio conference between remote locations, the method of providing a audio conference unit to each spot where the audio conference should be held respectively and then connecting these audio conference devices via the network to transmit/receive a sound signal is often employed. Also, various audio conference devices utilized in such audio conference have been devised.

In the audio conference device in JP-A-8-298 696, the sound is emitted from a speaker being arranged on a ceiling based on the sound signal input via the network, the sound is collected by the microphones being provided on respective side surfaces to direct in plural different directions respectively, and the sound signals from the microphones are sent out to the outside via the network.

Also, in an in-hall loudspeaker in JP-A-11-55784, the talker's direction is detected by applying a delay process to the collected signals from respective microphones in a microphone array, and a sound volume of the sounds emitted from the speakers near the talker is lowered.

With regard to the available prior art, attention is further drawn to CAO Y ET AL: "SPEECH ENHANCEMENT USING MICROPHONE ARRAY WITH MULTISTAGE PROCESSING", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E79-A, no. 3, 1 March 1996, pages 386-394, XP000594739, ISSN: 0916-8508.

### Disclosure of the Invention

### Problems that the Invention is to Solve

However, in the audio conference device in JP-A-8-298 696, the microphones and the speaker are arranged closely mutually, and thus plenty of sounds gone around from the speaker are contained in the collected signals of respective microphones. Therefore, when the talker's direction is specified based on the collected signals of respective microphones and then the collected sound signal corresponding to this direction is selected, the talker's direction is detected incorrectly because of the presence of detoured sounds.

Also, in the in-hall loudspeaker in JP-A-11-55784, the talker's direction is detected by applying the delay process to the collected signals containing the detoured sounds. Therefore, like JP-A-8-298 696, the influence of detoured sounds cannot be removed and in some cases the talker's direction is detected incorrectly.

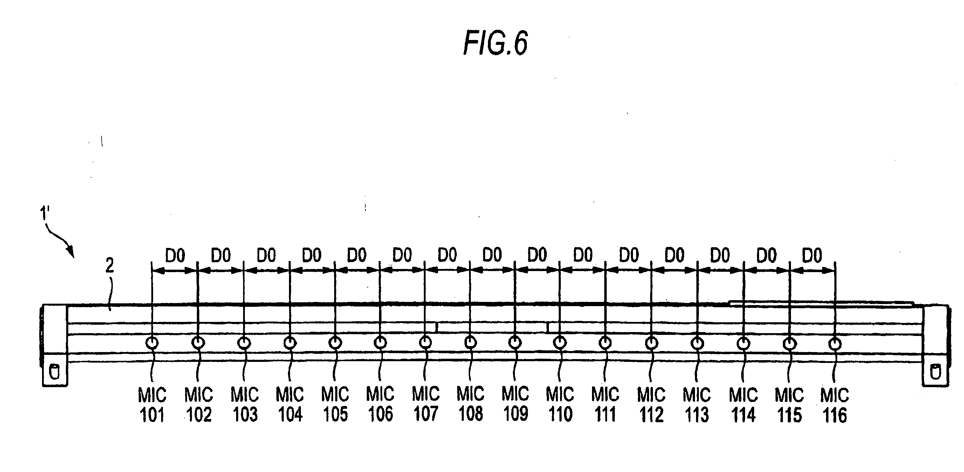

Also, apart from the audio conference devices in JP-A-8-298 696 and JP-A-11-55784, there is a long-length audio conference device equipped with a microphone array, as shown in FIG.6.

FIG.6 is a side view showing a main configuration of a long-length audio conference device in the prior art.

A audio conference device 1' shown in FIG.6 is a long unit, and is equipped with a microphone array on one side surface of which microphones MIC101 to MIC116 are arranged at an equal interval D0 in the longitudinal direction. Although not shown, a microphone array is provided on the side surface opposing to this side surface. The audio conference device 1' applies the delay process to the collected signals of the microphones MIC101 to MIC116 to produce the collected sound beam signals having a sharp directivity in different directions respectively. Then, the audio conference device 1' detects the talker's direction by selecting the collected sound beam signal whose signal intensity is strongest, and then sends out the selected sound collecting beam signal to the destination audio conference device. In such audio conference device 1' in the prior art, the number of arranged microphones and the microphone interval D0 are set based on a necessary talker detecting range and a size of the case. At this time, it is desirable in cost that the number of arranged microphones should be reduced as small as possible, and thus the microphone interval D0 is widened inevitably.

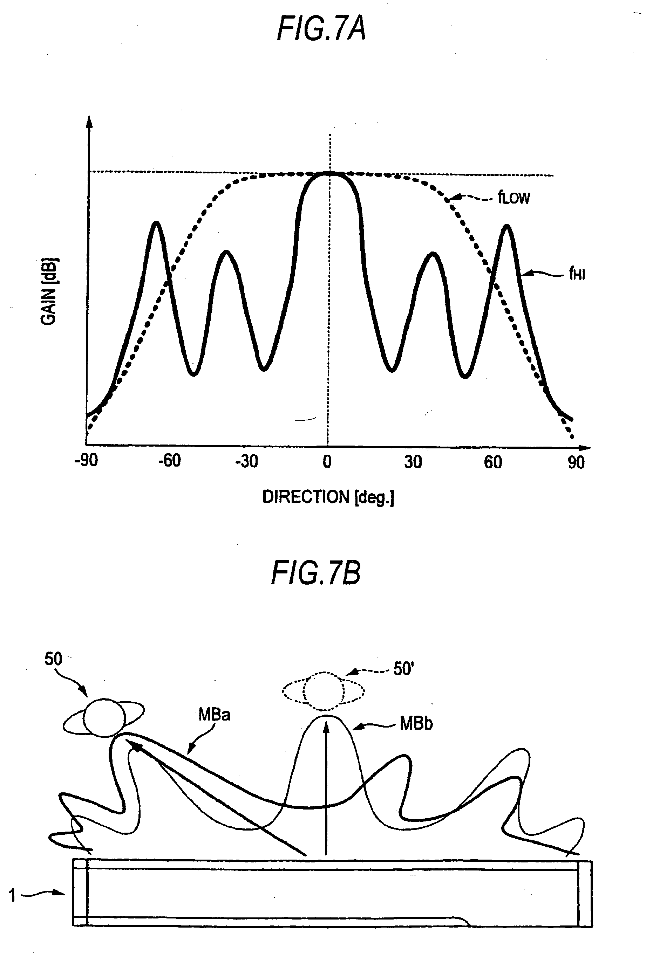

FIG.7A is a view showing the directivity of the sound collecting beam signal when the microphone interval D0 is wide in excess of some extent, and FIG.7B shows an example of a talker detection when the sound collecting beam signal having the directivity illustrated in FIG.7A is employed. In FIG.7A, "Direction" denotes the direction (deg) when the beam front direction is assumed as a direction of 0 °.

When the microphone interval D0 is wide, the sound signal in a low frequency range (fLOW) can get a sufficient gain around the beam front direction in a wide directional range, as shown in FIG.7A. In this case, the sound signal in a high frequency range (fHI) gets a gain in excess of some extent in the direction of about ±45 ° and the direction of about ±70 °, in addition to the beam front direction (the direction of 0°). That is, side lobes occur in the high frequency range (fHI).

For this reason, as shown in FIG.7B, it is possible that a sufficient signal intensity can be obtained not only in a sound collecting beam signal MBa picked up in a situation that the direction in which a talker 50 locates actually is set the front direction but also in a sound collecting beam signal MBb side lobes of which also indicate the direction in which the talker 50 locates actually respectively. Then, when a signal intensity of the sound collecting beam signal MBb becomes larger than a signal intensity of the sound collecting beam signal Mba, it is decided that, as shown in FIG.7B, the talker 50 (talker 50') locates in the front direction of the sound collecting beam signal MBb. Thus, there is such a possibility that the talker's direction is detected incorrectly. Further, accordingly the sound emitted from the talker 50 actually located in the sound collecting beam signal Mba direction cannot be collected at a sufficient level.

Therefore, it is an object of the present invention to provide a audio conference device capable of detecting a talker's direction exactly, and collecting a sound emitted from this direction at a high signal S/N ratio.

### Means for Solving the Problems

A audio conference device of the present invention is provided as set forth in claim 1.

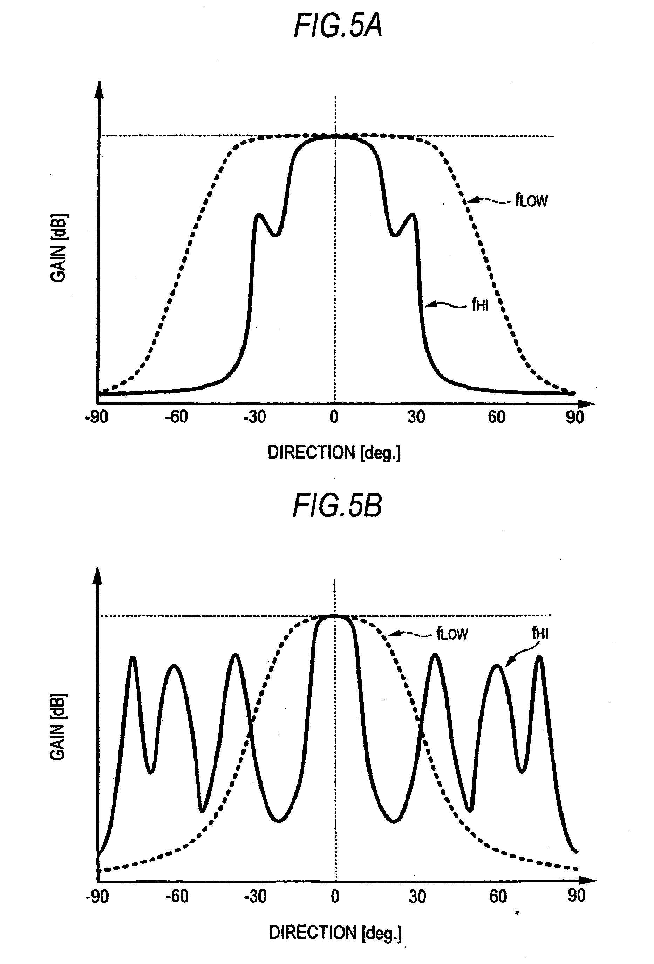

In this configuration, the plurality of microphones in the microphone array are aligned linearly. These microphones are aligned such that the interval between a predetermined number of microphones that are aligned in the center portion of the microphone group is smaller than the interval between the microphones that are aligned in both end portions to put the microphones in the center portion between them. The sound collecting beam signals generated by the first sound collecting beam generating portion are produced only by the sound collecting signals obtained by the microphones aligned in the center portion. Therefore, as shown in FIG.5A, the large side lobe is never generated in both the low frequency range and the high frequency range. As a result, the signal intensity in the beam signal front direction can be surely strengthened. That is, the signal intensity can be strengthened when the talker locates in the beam front direction.

The detecting portion compares the signal intensity between a plurality of generated detecting sound collecting beam signals, extracts the detecting sound collecting beam signal whose signal intensity is highest, and gets the concerned direction. The detecting portion gives the detected direction to the second sound collecting beam generating portion. Then, the second sound collecting beam generating portion generates the sound collecting beam signal having the highest directivity in the detected direction from the sound collecting signals of all microphones, and outputs such sound collecting beam signal. When all microphones are employed in this manner, as shown in FIG.5B, the side lobes are generated, but the sound collecting beam signal that has the sharper directivity in the beam front direction is generated. At this time, since the sound is seldom generated from the side areas except the front direction, the sound collecting beam signal by which only the sound emitted from the talker is picked up with a high gain can be generated without the influence of the side lobe.

Also, in the audio conference device of the present invention, the first sound collecting beam generating portion has a band-pass filter that has a particular frequency band decided based on a talker's sound as a pass band. The first sound collecting beam generating portion generates the plurality of detecting sound collecting beam signals by using the sound collecting signals subjected to a band passing process by the band-pass filter.

In this configuration, noise components except the talker's sound are eliminated by the band-pass filter. Therefore, the sound consisting only of the sound emitted from the talker is input into the first sound collecting beam generating portion. As a result, the signal intensity of the detecting sound collecting beam signal depends substantially only on the talker's sound, and the talker's direction can be detected more precisely.

### Advantage of the Invention

According to the present invention, the audio conference device capable of detecting the talker's direction without fail and thus collecting the sound emitted from the concerned direction at a high level can be implemented.

### Brief Description of the Drawings

FIGS.1A to 1C are three-view drawings of a audio conference device 1 according to the present embodiment.
FIG.2 is a functional block diagram of the audio conference device 1 according to the present embodiment.
FIG.3 is a functional block diagram of a sound collecting beam generating portion 181.
FIG.4 is a conceptual view showing the directivity direction of a sound collecting beam signal.
FIGS.5A and 5B are views showing the directivity characteristic of the sound collecting beam signal.
FIG.6 is a side view showing a main configuration of a long-length audio conference device in the prior art.
- FIG.7A is a view showing the directivity of the sound collecting beam signal when a microphone interval D0 is wide in excess of some extent, and FIG.7B shows an example of a talker detection when the sound collecting beam signal having the directivity illustrated in FIG.7A is employed.

### Best Mode for Carrying Out the Invention

A audio conference device according to an embodiment of the present invention will be explained with reference to the drawings hereinafter.

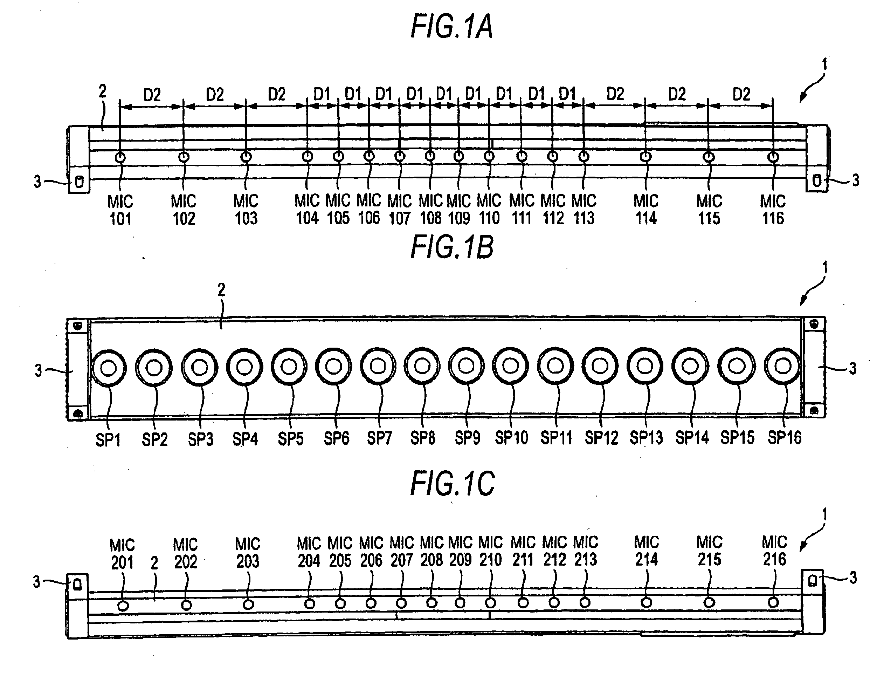

FIGS. 1A to 1C are three-view drawings of a audio conference device 1 according to the present embodiment, wherein FIGS. 1A and 1C are side views respectively and FIG. 1B is a bottom view.

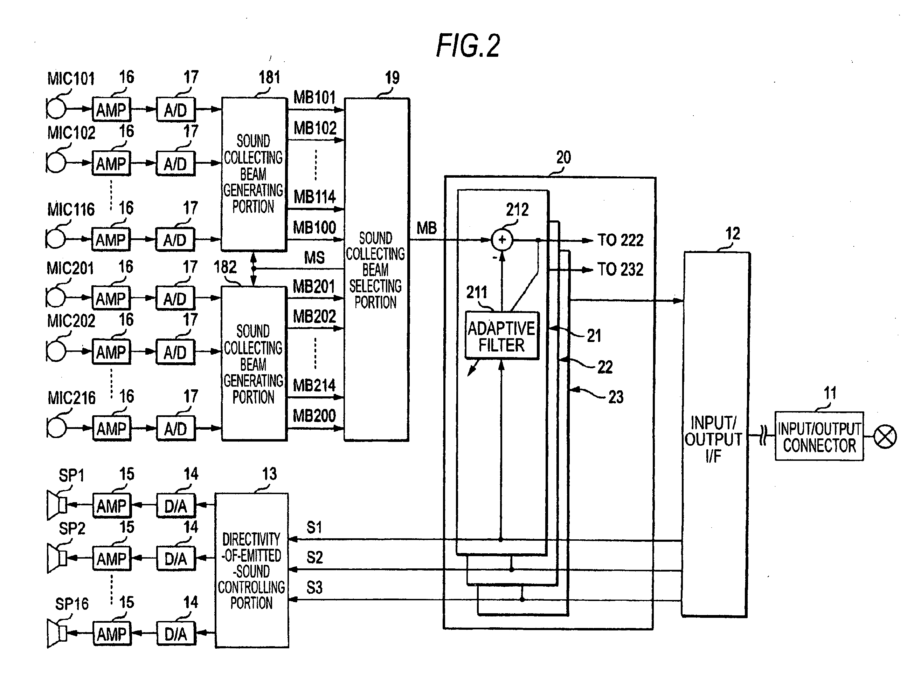

FIG.2 is a functional block diagram of the audio conference device 1 according to the present embodiment.

The audio conference device 1 of the present embodiment is constructed by providing a plurality of speakers SP1 to SP16, a plurality of microphones MIC101 to MIC116, MIC201 to MIC216, and function portions shown in FIG.2 to a case 2.

The case 2 is an almost rectangular parallelepiped that is long in one direction. A foot portion 3 of a predetermined height, which keeps a lower surface of the case 2 away from the mounted surface by a predetermined interval, is provided to both end portions of a long side (surface) of the case 2 respectively. Here, in the following explanation, a long-length surface out of four side surfaces of the case 2 is called a long surface, and a short-length surface is called a short surface.

The nondirectional-single-body speakers SP1 to SP16 that are formed into the same shape respectively are provided to the lower surface of the case 2. These single-body speakers SP1 to SP16 are provided linearly at a predetermined interval along the longitudinal direction.

The microphones MIC101 to MIC116 having the same specifications respectively are aligned linearly on one long surface of the case 2 along the longitudinal direction. A microphone array is composed of a group of microphones being aligned in this way. A microphone interval is set to D1 (<D0 (a microphone interval in the prior art)) from the microphone MIC 104 to the microphone MIC 113 in a center portion of the microphone array in the alignment direction (longitudinal direction), while a microphone interval is set to D2 (>D0>D1) from the microphone MIC 101 to the microphone MIC 104 and from the microphone MIC 113 to the microphone MIC 116 in both end portions. That is, ten microphones in the center portion in the alignment direction are aligned densely whereas three microphones in both ends in the alignment direction are aligned coarsely respectively.

The microphones MIC201 to MIC216 having the same specifications respectively are aligned on the other long surface of the case 2 in positions that oppose to the microphones MIC101 to MIC116. Concretely, a microphone interval is set to D1 (<D0 (a microphone interval in the prior art)) from the microphone MIC 204 to the microphone MIC 213 in the center portion in the alignment direction (longitudinal direction), while a microphone interval is set to D2 (>D0>D1) from the microphone MIC 201 to the microphone MIC 204 and from the microphone MIC 213 to the microphone MIC 216 in both end portions

Here, in the present embodiment, the number of microphones in each microphone array is set to 16 respectively. But the number of microphones is not limited to this number, and the number of microphones may be set appropriately according to the specifications.

Next, as shown in FIG.2, a audio conference device 1 of the present embodiment includes an input/ output connector 11, an input/output I/F 12, a directivity-of- emitted-sound controlling portion 13, D/A converters 14, sound emitting amplifiers 15, the above speaker array SPA (speakers SP1 to SP16), the above microphone arrays MA10, MA20 (the microphones MIC101 to MIC116, MIC201 to MIC216), sound collecting amplifiers 16, A/D converters 17, sound collecting beam generating portions 181, 182, a sound collecting beam selecting portion 19, and an echo canceling portion 20.

The input/output I/F 12 converts the input sound signal, which is input from other sound emitting device via the input/ output connector 11, from a data format (protocol) compatible with the network to a predetermined sound data format, and then sends the converted sound signal to the directivity-of-emitted-sound controlling portion 13 via the echo canceling portion 20. Also, the input/output I/F 12 converts the output sound signal generated by the echo canceling portion 20 into a data format (protocol) compatible with the network, and sends out the converted sound signal to the network via the input/output connector 11.

The directivity-of-emitted-sound controlling portion 13 applies the delay process, the amplitude process, etc. peculiar to the speakers SP1 to SP16 of the speaker array respectively to the input sound signal based on the specified directivity of the emitted sound, and thus produces individual emitted sound signals. The directivity-of-emitted-sound controlling portion 13 outputs these individual emitted sound signals to the D/A converters 14 provided to the speakers SP1 to SP16 respectively. Respective D/A converters 14 convert the individual emitted sound signals in an analog form, and output the converted sound signals to the sound emitting amplifiers 15. Respective sound emitting amplifiers 15 amplify the individual emitted sound signals, and feed the amplified sound signals to the speakers SP1 to SP16.

The speakers SP1 to SP16 convert the fed individual emitted sound signals into individual sounds, and emit the sounds to the outside respectively. At this time, the speakers SP1 to SP16 are fitted to the lower surface of the case 2. Therefore, the emitted sounds are reflected from an upper surface of the desk on which the audio conference device 1 is put, and then are propagated obliquely upward to pass by the audio conference device at which the conferee sits now.

Respective microphones MIC101 to MIC116, MIC201 to MIC216 in the microphone array may be either non-directional or directional. But it is desirable that these microphones should have the directivity. Respective microphones pick up sounds from the outside of the audio conference device 1, convert the sounds into electric signals, and output sound collecting signals to the sound collecting amplifiers 16. The sound collecting amplifiers 16 amplify the sound collecting signals respectively, and feed the amplified signals to the A/D converters 17. The A/D converters 17 convert the sound collecting signals into the digital signals, and output the digital signals to the sound collecting beam generating portions 181, 182.

The sound collecting signals picked up by the microphones MIC101 to MIC116 of the microphone array MA10 fitted on one long surface respectively are input into the sound collecting beam generating portion 181. The sound collecting signals picked up by the microphones MIC201 to MIC216 of the microphone array MA20 fitted on the other long surface respectively are input into the sound collecting beam generating portion 182.

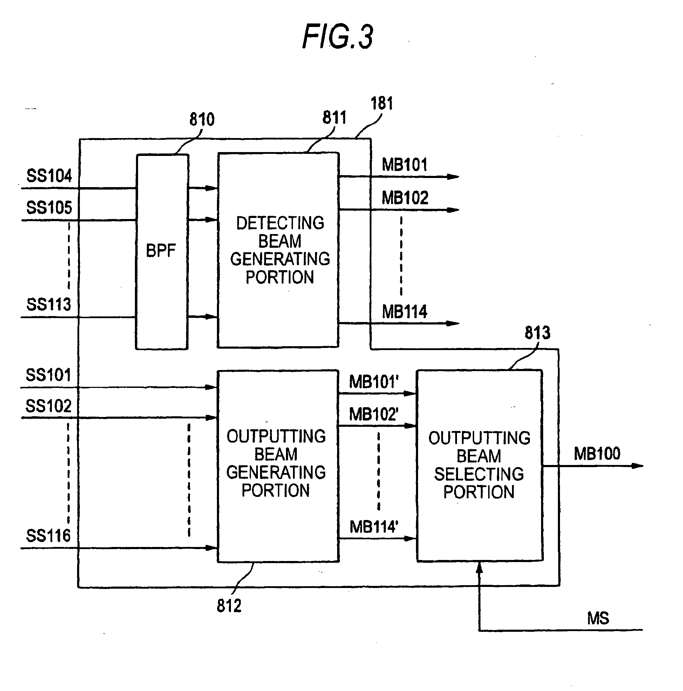

The sound collecting beam generating portions 181, 182 have the same configuration respectively. FIG.3 is a functional block diagram of the sound collecting beam generating portion 181. Here, since the sound collecting beam generating portions 181, 182 are constructed similarly, only the configuration of the sound collecting beam generating portion 181 will be explained concretely hereunder.

The sound collecting beam generating portion 181 has a band-pass filter (BPF) 810, a detecting beam generating portion 811, an outputting beam generating portion 812, and an outputting beam selecting portion 813.

The band-pass filter 810 passes only a predetermined frequency component of sound collecting signals SS104 to SS113 picked up by the microphones MIC104 to MIC113, and outputs it to the detecting beam generating portion 811. Here, the predetermined frequency component is set to a particular frequency component in the human sound. In the present embodiment, a high frequency range (2kHz to 3 kHz) whose energy is relatively small is set as a pass band.

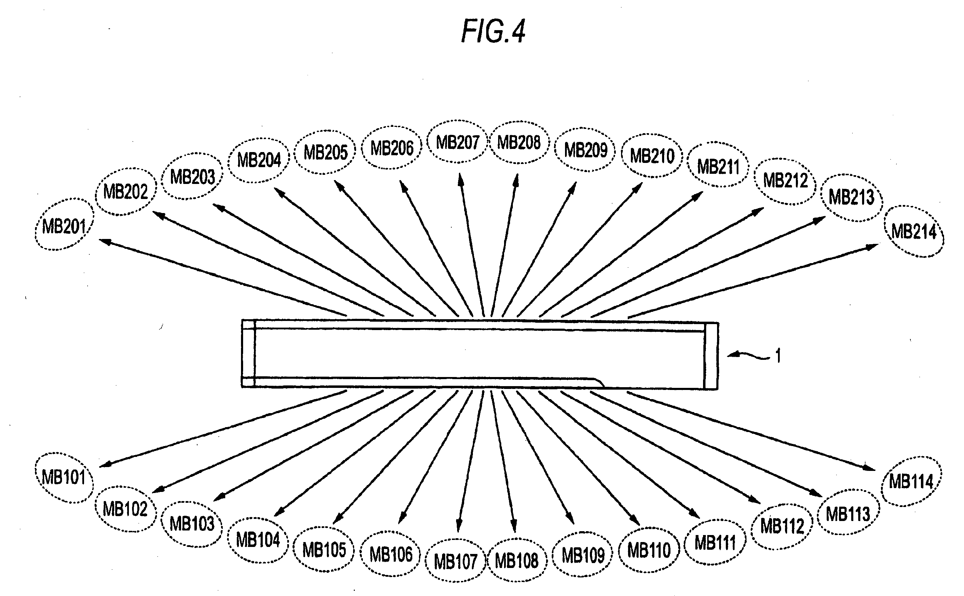

The detecting beam generating portion 811 applies delay-sum control to the sound collecting signals SS104 to SS113 that are picked up by the center microphones MIC104 to MIC113 and passed through the band-pass filter 810. Thus, as shown in FIG.4, the detecting beam generating portion 811 generates sound collecting beam signals MB101 to MB114 that have a sharp directivity in different directions respectively. FIG.4 is a conceptual view showing the directivity direction of the sound collecting beam signals. The sound collecting beam signals MB101 to MB114 are set such that the direction of the sharp directivity is differentiated sequentially along the long-length direction of the audio conference device 1. The generated sound collecting beam signals MB101 to MB114 are output to the sound collecting beam selecting portion 19.

The outputting beam generating portion 812 applies the delay-sum control to the sound collecting signals SS101 to SS116. Thus, the outputting beam generating portion 812 generates sound collecting beam signals MB101' to MB114' that have the sharp directivity in the same direction as the sound collecting beam signals MB101 to MB114 respectively.

When direction data MS is input from the sound collecting beam selecting portion 19 described later, the outputting beam selecting portion 813 detects the sound collecting beam signal corresponding to the concerned direction from the sound collecting beam signals MB101' to MB114', and then outputs the concerned sound collecting beam signal as an output sound collecting beam signal MB100 to the sound collecting beam selecting portion 19.

The sound collecting beam generating portion 182 has the same configuration as the sound collecting beam generating portion 181. The sound collecting beam generating portion 182 generates sound collecting beam signals MB201 to MB214 from the sound collecting signals SS201 to SS216 (not shown) fed from the microphones MIC201 to MIC216 and then outputs these sound collecting beam signals to the sound collecting beam selecting portion 19. Also, the sound collecting beam generating portion 182 outputs an output sound collecting beam signal MB200 to the sound collecting beam selecting portion 19 based on the direction data MS from the sound collecting beam selecting portion 19.

The sound collecting beam selecting portion 19 compares signal intensities between the sound collecting beam signals MB101 to MB114 and MB201 to MB214, and detects the sound collecting beam signal whose sound signal is highest. The sound collecting beam selecting portion 19 feeds the direction data MS corresponding to the detected sound collecting beam signal to the sound collecting beam generating portions 181 182.

Then, the sound collecting beam selecting portion 19 outputs the output sound collecting beam signal MB100 from the sound collecting beam generating portion 181 and the output sound collecting beam signal MB200 from the sound collecting beam generating portion 182 to the echo canceling portion 20 as an output sound collecting beam signal MB.

According to this configuration, the audio conference device 1 of the present embodiment possesses following advantages.

FIGS.5A and 5B are views showing the directivity characteristic of the sound collecting beam signal, wherein FIG.5A shows the case where the sound collecting beam signals are generated only by the microphones in the center portion in which the microphones are aligned densely, and FIG.5B shows the case where the sound collecting beam signals are generated by all microphones.

As shown in FIG.5A, when the sound collecting beam signals are generated only by the microphones in the center portion, a high gain is obtained in both the high frequency range and the low frequency range, a width of the main lobe (direction angle range) around the beam front direction is widened, and the side lobe is seldom generated. Therefore, the signal intensities of respective sound collecting beam signals are not affected by the side lobes, and depend on the main lobe only. Accordingly, the sound collecting beam signals have the high signal intensity respectively only when the talker locates in the beam front direction. As a result, when the sound collecting beam signal whose signal intensity is high is selected, the talker's direction can be detected precisely in some directional angle range. Also, unlike the prior art, it can be prevented that the totally different direction is recognized incorrectly as the talker's direction.

Then, as shown in FIG.5B, when the sound collecting beam signals are generated by all microphones, a width of the main lobe is narrowed. Therefore, the talker's sound can be picked up within the narrower directivity. At this time, the side lobe is generated in the high frequency range. However, since the talker's sound arrives at only in the front direction of the selected sound collecting beam signal, such talker's sound is not influenced by the side lobe at all.

In this manner, with the arrangement of the present embodiment, the talker's direction can be detected precisely and also the talker's sound can be collected by the beam whose directivity is sharp.

The echo canceling portion 20 is equipped with echo cancellers 21 to 23 that are provided independently respectively and are connected in series. That is, the output sound collecting beam signal MB from the sound collecting beam selecting portion 19 is input into the echo canceller 21, and an output of the echo canceller 21 is input into the echo canceller 22. Then, an output of the echo canceller 22 is input into the echo canceller 23, and an output of the echo canceller 23 is input into the input/output I/F 12.

The echo canceller 21 is equipped with an adaptive filter 211 and a post processor 212. Also, although not shown, the echo cancellers 22, 23 are constructed by the same configuration as the echo canceller 21, and are equipped with adaptive filters 221, 231 and post processors 222, 232 respectively.

The adaptive filter 211 of the echo canceller 21 generates a pseudo regression sound signal, which is based upon the directivity of the emitted sound to be set and the directivity of the collected sound of the particular sound collecting beam signal MB to be selected, in response to an input sound signal S1. The post processor 212 subtracts the pseudo regression sound signal corresponding to the input sound signal S1 from the particular sound collecting beam signal being output from the sound collecting beam selecting portion 19, and outputs a resultant signal to the post processor 222 of the echo canceller 22.

The adaptive filter 221 of the echo canceller 22 generates a pseudo regression sound signal, which is based upon the directivity of the emitted sound to be set and the directivity of the collected sound of the particular sound collecting beam signal MB to be selected, in response to an input sound signal S2. The post processor 222 subtracts the pseudo regression sound signal corresponding to the input sound signal S2 from a first subtraction signal being output from the post processor 212 of the echo canceller 21, and outputs a resultant signal to the post processor 232 of the echo canceller 23.

The adaptive filter 231 of the echo canceller 23 generates a pseudo regression sound signal, which is based upon the directivity of the emitted sound to be set and the directivity of the collected sound of the particular sound collecting beam signal MB to be selected, in response to an input sound signal S3. The post processor 232 subtracts the pseudo regression sound signal corresponding to the input sound signal S3 from a second subtraction signal being output from the post processor 222 of the echo canceller 22, and outputs a resultant signal to the input/output I/F 12 as the output sound signal. Here, any one of the echo cancellers 21 to 23 is operated when one input sound signal is input, and any two of the echo cancellers 21 to 23 are operated when two input sound signals are input.

An appropriate echo elimination can be done by executing such echo canceling process, and only the talker's sound of user's own audio conference device can be sent out to the network as the output sound signal.

As described above, with the arrangement of the present embodiment, the audio conference device capable of detecting the talker's direction precisely and also outputting the talker's sound only at a high S/N ratio can be constructed.

In this case, an example where fourteen sound collecting beam signals are generated respectively is illustrated in the above explanation. But the numbers of beams may be set appropriately according to the specifications.

Also, an example where the band-pass filter is provided is illustrated in the above explanation. But such a configuration may be employed that no band-pass filter is provided.

Also, in the above explanation, the method of generating the detecting sound collecting beam signals MB101 to MB114 and the outputting sound collecting beam signals MB101' to MB114' simultaneously and then selecting the concerned sound collecting beam signal is illustrated. But the concerned outputting sound collecting beam signal may be generated from all sound collecting signals SS101 to SS116, based on the results of the detecting sound collecting beam signal MB101 to MB114.

Also, the sound collecting beam selecting portion 19 may select one sound collecting beam based on the amplitude of the sound collecting beam signal. Otherwise, the sound collecting beam selecting portion 19 may select one sound collecting beam based on a time average energy of the sound collecting beam signals, or the like.

Also, an interval between the microphones MIC 104 to MIC113 is set constant as D1, and an interval between the microphones MIC 101 to MIC104 and MIC 113 to MIC116 is set constant as D2. In this event, if the arrangement is not affected by the side lobe of the detecting beam in the detected frequency band, all microphone intervals may be made different, for example.

The present invention is explained in detail with reference to particular embodiment. But it is obvious for those skilled in the art that various variations and modifications can be applied without departing from the scope of the present invention as defined by the appended claims.

## Claims

1. A audio conference device, comprising:
a microphone array which has a plurality of microphones (MIC101-MIC116) aligned linearly, in which first microphones (MIC104-113) are positioned at a center portion of the microphone array spaced from one another by a first interval, and second microphones (MIC101-MIC103; MIC114-MIC116) are positioned at both end portions of the microphone array spaced from one another by a second interval, said first interval being smaller then said second interval;
a first sound collecting beam generating portion (810, 811) configured to apply a first delay process to sound collecting signals (SS104-SS113) obtained from the first microphones (MIC104-MIC113) positioned at the center portion of the microphone array to generate a plurality of detecting sound collecting beam signals that have directivities in different directions, respectively;
a detecting portion (19) adapted to detect a talker's direction (MS) by comparing signal intensities of the plurality of detecting sound collecting beam signals; and
a second sound collecting beam generating portion adapted to generate a sound collecting beam signal (MB100) that has a directivity in the detected talker's direction (MS), by applying a second delay process to the sound collecting signals (SS101-SS116) obtained from all microphones (MIC101-MIC116) of the microphone array, based on the talker's direction (MS) detected by the detecting portion (19).

2. The audio conference device according to claim 1, wherein the first sound collecting beam generating portion (810, 811) has a band-pass filter (810) that has a particular frequency band decided based on a talker's sound as a pass band; and
wherein the first sound collecting beam generating portion (810, 811) is adapted to generate the plurality of detecting sound collecting beam signals by using the sound collecting signals (SS104-SS113) subjected to a band passing process by the band-pass filter (810).

## Patentansprüche

1. Sprach- bzw. Audiokonferenzvorrichtung, die Folgendes aufweist:
eine Mikrofonanordnung, die eine Vielzahl von Mikrofonen (MIC101-MIC116) besitzt, die in linearer Weise ausgerichtet sind, in der erste Mikrofone (MIC104-113) an einem Mittelteil der Mikrofonanordnung mit einem ersten Intervall voneinander beabstandet positioniert sind, und zweite Mikrofone (MIC101-MIC103; MIC114-MIC116) an beiden Endteilen der Mikrofonanordnung mit einem zweiten Intervall voneinander beabstandet positioniert sind, wobei das erste Intervall kleiner als das zweite Intervall ist;
ein erster Schallsammelstrahlerzeugungsteil (810, 811), der konfiguriert ist, um einen ersten Verzögerungsprozess auf die Schallsammelsignale (SS104-SS113) anzuwenden, die von den ersten Mikrofonen (MIC104-MIC113) erhalten werden, die an dem Mittelteil der Mikrofonanordnung positioniert sind, um eine Vielzahl von Detektionsschallsammelstrahlsignalen zu erzeugen, die jeweils Richtcharakteristiken in unterschiedlichen Richtungen besitzen;
einen Detektionsteil (19), der angepasst ist, um die Ausrichtung (MS) eines Sprechers zu detektieren, und zwar durch Vergleichen der Signalintensitäten der Vielzahl von Detektionsschallsammelstrahlsignalen; und
einen zweiten Schallsammelstrahlerzeugungsteil, der angepasst ist, um ein Schallsammelstrahlsignal (MB100) zu erzeugen, das eine Richtcharakteristik in der detektierten Ausrichtung (MS) des Sprechers besitzt, und zwar durch Anwenden eines zweiten Verzögerungsprozesses auf die Schallsammelsignale (SS101-SS116), die von sämtlichen Mikrofonen (MIC101-MIC116) der Mikrofonanordnung erhalten werden, und zwar basierend auf der Ausrichtung (MS) des Sprechers, die durch den Detektionsteil (19) detektiert wird.

2. Audiokonferenzvorrichtung gemäß Anspruch 1, wobei der erste Schallsammelstrahlerzeugungsteil (810, 811) einen Bandpassfilter (810) besitzt, der auf ein bestimmtes Frequenzband festgelegt ist, und zwar basierend auf einem Schall bzw. Klang des Sprechers als Durchlassbereich; und
Wobei der erste Schallsammelstrahlerzeugungsteil (810, 811) angepasst ist, um die Vielzahl der Detektionsschallsammelstrahlsignale durch Verwendung der Schallsammelsignale (SS104-SS113) zu erzeugen, die einem Bandpassfilterungsprozess durch den Bandpassfilter (810) unterzogen werden.

## Revendications

1. Dispositif de conférence audio, comprenant :
un réseau de microphones qui comporte une pluralité de microphones (MIC101 à MIC116) alignés linéairement, dans lequel des premiers microphones (MIC104 à 113) sont positionnés dans une partie centrale du réseau de microphones espacés les uns des autres d'un premier intervalle, et des deuxièmes microphones (MIC101 à MIC103 ; MIC114 à MIC116) sont positionnés au niveau des deux parties d'extrémité du réseau de microphones espacés les uns des autres d'un deuxième intervalle, ledit premier intervalle étant plus petit que ledit deuxième intervalle ;
une première partie de génération de faisceau de collecte de son (810, 811) configurée pour appliquer un premier processus de retard aux signaux de collecte de son (SS104 à SS113) obtenus à partir des premiers microphones (MIC104 à MIC113) positionnés dans la partie centrale du réseau de microphones pour générer une pluralité de signaux de faisceau de collecte de son de détection qui ont des directivités dans différentes directions, respectivement ;
une partie de détection (19) conçue pour détecter une direction (MS) du locuteur en comparant les intensités de signal de la pluralité de signaux de faisceau de collecte de son de détection ; et
une deuxième partie de génération de faisceau de collecte de son conçue pour générer un signal de faisceau de collecte de son (MB100) qui a une directivité dans la direction (MS) du locuteur détecté, en appliquant un deuxième processus de retard aux signaux de collecte de son (SS101 à SS116) obtenus de tous les microphones (MIC101 à MIC116) du réseau de microphones, sur la base de la direction (MS) du locuteur détectée par la partie de détection (19).

2. Dispositif de conférence audio selon la revendication 1, dans lequel la première partie de génération de faisceau de collecte de son (810, 811) comporte un filtre passe-bande (810) qui a une bande de fréquence particulière déterminée sur la base d'un son du locuteur en tant que bande passante ; et
dans lequel la première partie de génération de faisceau de collecte de son (810, 811) est conçue pour générer la pluralité de signaux de faisceau de collecte de son de détection en utilisant les signaux de collecte de son (SS104 à SS113) soumis à un processus de passage de bande par le filtre passe-bande (810).
